# EUROPÄISCHE PATENTSCHRIFT

(11) **EP 1 284 348 B1**
(45) Veröffentlichungstag und Bekanntmachung des Hinweises auf die Patenterteilung: **02.04.2008**
(21) Anmeldenummer: 02012138.0
(22) Anmeldetag: 01.06.2002
(51) Int. Cl.: F02D 11/10

(54) **Stellungsgeber und Verfahren sowie Vorrichtung zur Überwachung eines Stellungsgebers**
Position sensor and method as well as apparatus for monitoring a position sensor
Capteur de position et procédé et appareil pour surveiller un capteur de position

(30) Priorität: 26.06.2001 DE 10130704
(43) Veröffentlichungstag der Anmeldung: 19.02.2003
(73) Patentinhaber: ROBERT BOSCH GMBH, 70442 Stuttgart (DE)
(72) Erfinder: Hafner, Arno, 2371 Hinterbrühl (AT)

(56) Entgegenhaltungen:
- DE-A1- 4 335 913
- US-A- 5 224 453
- US-A- 6 075 371

## Beschreibung

### Stand der Technik

Die Erfindung betrifft ein Stellungsgeber und ein Verfahren sowie eine Vorrichtung zur Überwachung eines Stellungsgebers

Die US 6,075,371 offenbart einen linearen Positionssensor mit ersten und zweiten Ausgangssignalgeneratoren, von denen jeder ein Ausgangssignal in Abhängigkeit der Position eines Detektionsobjektes ausgibt. Wenn das Detektionsobjekt von einer Ausgangsposition sich bewegt, dann erhöht sich das Ausgangssignal des ersten Ausgangssignalgenerators linear von einem Ausgangswert, der der Initialposition des Detektionsobjektes entspricht. Das Ausgangssignal des zweiten Ausgangssignalgenerators erhöht sich linear von einem Ausgangswert, der größer als der Ausgangswert entsprechend der Ausgangsposition des Detektionsobjektes ist. Nach Erreichen eines Maximalwertes bleibt das Ausgangssignal des zweiten Ausgangssignalgenerators bei einem Maximalwert, wenn das Detektionsobjekt sich weiter in Richtung einer maximalen Auslenkung bewegt. Auf diese Weise werden Ausgangssignalcharakteristiken erzielt, so dass dort immer eine Differenz zwischen den Positionen des Detektionsobjektes auftritt, die durch die Ausgangssignale der beiden Ausgangssignalgeneratoren angezeigt werden, wenn eine Abnormalität, wie z. B. ein Abfall in der Versorgungsspannung des Sensors, eine Erhöhung des Massepotentials, ein Kurzschluss zwischen den Ausgängen des ersten und zweiten Ausgangssignalgenerators oder dergleichen auftritt. Basierend auf dieser Differenz kann eine Abnormalität des linearen Positionssensors detektiert werden (Abstract).

Aus der DE 42 35 880 A ist ein Stellungsgeber und ein Verfahren sowie eine Vorrichtung zur Überwachung dieses Stellungsgebers am Beispiel eines Stellungsgebers für ein vom Fahrer betätigbares Bedienelement beschrieben. Die Stellung des Bedienelements wird dabei durch zwei Messeinrichtungen bzw. Sensoren, die zueinander redundant sind, erfasst. Es werden also zwei voneinander unabhängige Messsignale erzeugt. Der Zusammenhang zwischen den erzeugten Messsignalen und der Stellung des Bedienelements wird dabei durch zwei Kennlinien unterschiedlicher Steigung beschreiben. Zur Steuerung der Antriebseinheit des Fahrzeugs wird eines der Messsignale verwendet, während das andere zur Überwachung des die Führungsgröße darstellenden Messsignals ausgewertet wird. Zur Überwachung werden die Messsignale auf zulässige Wertebereiche überprüft.

Eine vergleichbare Vorgehensweise wird in der DE-A 197 19 518 (US-Patent 5,875,760) vorgestellt. Hier wird die Überprüfung der Messgrößen im Rahmen einer Gleichlauftoleranz durchgeführt. Gleichlauftoleranz bedeutet dabei, dass sich die Messgrößen im Rahmen einer vorgegebenen Toleranz nicht unterscheiden. Bei einem Stellungsgeber, wie er im erst genannten Stand der Technik beschrieben ist, ergibt sich bei einer Gleichlauftoleranz eine zuverlässige Fehlererkennung erst dann, wenn sich die jeweiligen Toleranzbereiche der einzelnen Messgrößen nicht mehr überlappen. Dies ist erst dann der Fall, wenn ausgehend von der Ruhestellung ein gewisser Weg durchschritten ist.

Eine andere Vorgehensweise zur Überwachung eines Stellungsgebers ist aus der DE 35 10 173 A1 (US-Patent 4,603,675) bekannt. Dort wird die Stellung von einem kontinuierlichen Stellungsgeber und einem Schaltelement, welches ein zweiwertiges Stellungssignal abgibt, erfasst. Zur Überwachung wird der Schaltsignalzustand mit dem Stellungsmesswert verglichen, um daraus eine Fehlfunktion abzuleiten. Hier wird lediglich eine grobe Überwachungsmöglichkeit bereitgestellt.

Es besteht somit Bedarf an einer Optimierung der Situation.

### Vorteile der Erfindung

Durch einen Stellungsgeber, welcher ein erstes Messsignal im Rahmen einer kontinuierlichen Kennlinie, ein zweites Messsignal im Rahmen einer kontinuierlichen Kennlinie mit wenigstens einen stufenförmigen Verlauf bildet, werden zum einen, wenn der stufenförmige Verlauf sich im Bereich der Ruhestellung befindet, eine frühzeitige Überwachung des Stellungsgebers ermöglicht, zum anderen kann über den weiteren Stellungsbereich die bewährte Überwachung auf der Basis einer Gleichlauftoleranz ausgeführt werden.

Besonders vorteilhaft ist, die Realisierung als Doppelpotentiometer.

In vorteilhafter Weise wird also der oben skizzierte Leerweg vermieden. Vielmehr wird bereits bei kleinen Stellungswerten eine Plausibilisierung der beiden Stellungssignale ermöglicht, so dass die Überwachung der Stellungserfassung optimiert werden kann.

In besonders vorteilhafter Weise ist bei einem Stellungsgeber zur Erfassung der Stellung eines Fahrpedals ein weiterer Sprung in der Kennlinie einer Messgröße in der Nähe der Endstellung vorgesehen, welcher zur Erkennung des Kick-Down-Punktes ausgewertet wird.

In vorteilhafter Weise wird ferner die Charakteristik (Kennlinie) des ersten Messsignals, welches zur Durchführung von Steuerfunktionen ausgewertet wird, nicht verändert, so dass auf eine Anpassung der Steuerfunktionen mit Ausnahme der Überwachungsalgorithmen verzichtet werden kann.

Weitere Vorteile ergeben sich aus der nachfolgenden Beschreibung von Ausführungsbeispielen sowie aus den abhängigen Patentansprüchen.

### Zeichnung

Die Erfindung wird nachstehend anhand der in der Zeichnung dargestellten Ausführungsformen näher erläutert. Figur 1 zeigt ein Übersichtsschaltbild einer Steuereinrichtung, bei welcher die Stellung eines Bedienelements von einem Stellungsgeber mit zwei redundanten Sensoren erfasst wird. In Figur 2 ist ein bevorzugtes Ausführungsbeispiel von Kennlinien der auszuwertenden Messgrößen über der Stellung dargestellt. Figur 3 zeigt ein bevorzugtes Ausführungsbeispiel der Realisierung des Stellungsgebers als Doppelpotentiometer. In Figur 4 ist ein Ablaufdiagramm als Flussdiagramm skizziert, welches eine Vorgehensweise zur Überwachung der Funktionsweise des Stellungsgebers durch die Steuereinrichtung skizziert.

### Beschreibung von Ausführungsbeispielen

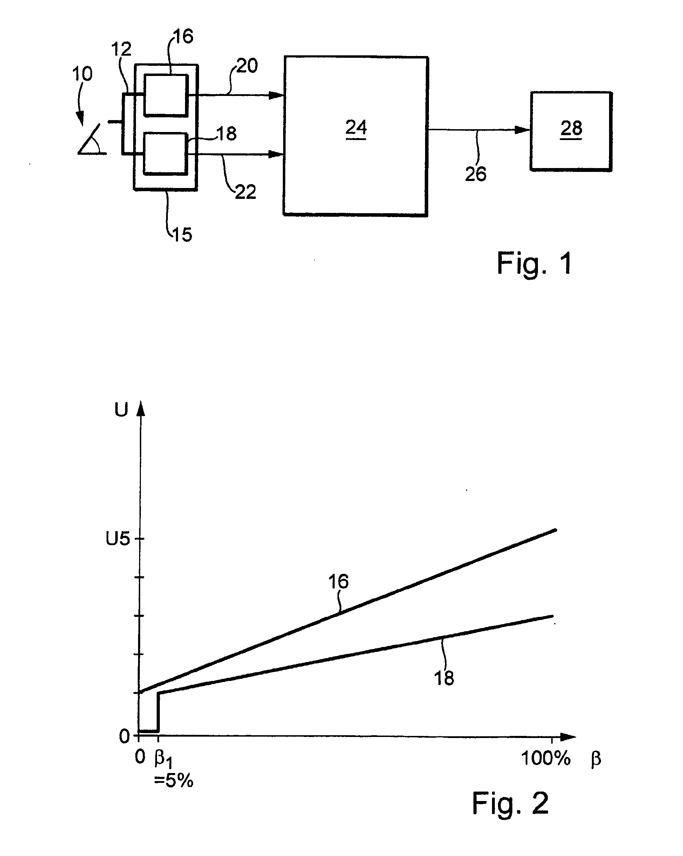

Figur 1 zeigt ein bevorzugtes Ausführungsbeispiel mit einer Steuereinrichtung, bei welcher unter anderem Stellungsgrößen verwendet werden, die von zwei redundanten Stellungssensoren stammen. Ein bevorzugtes Anwendungsgebiet ist dabei eine elektronische Motorleistungssteuerung, jedoch kann der nachfolgend beschriebene Stellungsgeber bzw. die Vorgehensweise zur Überwachung des Stellungsgebers bei jeder Anwendung von redundanten Stellungsgebern eingesetzt werden. Redundant in diesem Zusammenhang bedeutet, dass beide Sensoren die Stellung oder Position eines mit ihnen verbundenen Aggregats erfassen und jeweils auswertbare kontinuierlich sich verändernde Signale über nahezu den gesamten vorgesehenen Arbeitsbereich der Betriebsgröße abgeben.

Im Ausführungsbeispiel der Figur 1 ist ein vom Fahrer betätigbares Bedienelement 10 vorgesehen, welches über eine mechanische Verbindung 12 mit einem Stellungsgeber 15 verbunden, welcher zwei Sensoren 16 und 18 umfasst. Die Messsignalleitungen 20 und 22 der Sensoren 16 und 18 werden auf eine Steuereinheit 24 geführt, die wenigstens einen Mikrocomputer enthält. Deren Ausgangssignalleitung 26 führt auf wenigstens ein Stellelement 28, welches in Abhängigkeit von wenigstens einem der über die Leitungen 20 und 22 zugeführten Messsignale betätigt wird.

Im bevorzugtem Ausführungsbeispiel handelt es sich bei dem Stellelement 28 um die Drosselklappe oder ein anderes leistungsbestimmendes Stellelement einer Brennkraftmaschine oder um Einspritzventile, deren Ansteuersignale auf der Basis wenigstens eines Stellungssignals gebildet werden. Die nachfolgend beschriebene Vorgehensweise zeigt auch in Verbindung mit alternativen Antriebskonzepten bei Fahrzeugen, beispielsweise Elektromotoren, die oben beschriebene vorteilhafte Wirkung.

Bei dem bevorzugten Ausführungsbeispiel der in Figur 1 dargestellten Sensoren 16 und 18 handelt es sich um Potentiometer. Je nach Ausführungsbeispiel sind diese Sensoren in einem Gehäuse integriert oder in zwei unterschiedlichen Gehäusen verpackt.

Die in Figur 1 dargestellte Anordnung arbeitet wie folgt. Die Sensoren 16 und 18 liefern über Messsignalleitungen 20 und 22 an die Steuereinheit 24 zwei Messgrößen, welche die Stellung des Bedienelements 10 repräsentieren. Diese analogen Signalen werden digitalisiert. Aus diesen beiden Messgrößen wird ein Fahrerwunsch abgeleitet, welcher unter Berücksichtigung weiterer Betriebsgrößen und ggf. Sollgrößen anderer Systeme in wenigstens ein Ansteuersignal zur Steuerung des wenigstens einen Stellelements 28 umgesetzt wird. Da durch den auf der Basis der Messgrößen abgeleiteter Fahrerwunsch die Leistungssteuerung des Motors erfolgt, ist es notwendig sicherzustellen, dass die Messgrößen, die von der Steuereinheit 24 eingelesen werden, fehlerfrei sind.

Die Digitalisierung der Messgrößen kann in anderen Ausführung auch in der Messeinrichtung 15 erfolgen. Ferner können die digitalen oder analogen Signal zwischenverarbeitet werden (z.B. gewichtet), bevor sie zur Fahrerwunschbildung herangezogen werden.

Die Charakteristik des Stellungsgebers bzw. der Sensoren 16 und 18 lässt sich durch Kennlinien darstellen, welche die Abhängigkeit der auf den Leitungen 20 und 22 abgegebenen Messsignalgrößen über der Stellung (z. B. Stellung des Bedienelements β) aufgetragen sind. In Figur 2 ist beispielhaft die Charakteristik des Stellungsgebers aufgetragen. Es ist die Abhängigkeit der jeweiligen Messsignalgröße U über der Stellung β eines Bedienelements dargestellt. Dabei verändert sich die Stellung des Bedienelements von der Ruhestellung zur Endstellung (100%), in der das Bedienelement bis zum Anschlag getreten ist. Der in Figur 2 beispielhaft dargestellte Kennlinienverlauf zeigt die Kennlinie des Sensors 16, welche über den gesamten Bereich der Stellung des Bedienelements kontinuierlich ist und eine erste Steigung aufweist. Die Kennlinie des zweiten Sensors 18 ist bis auf den Bereich der Ruhestellung des Bedienelements ebenfalls über den gesamten Bereich der Stellung kontinuierlich und weist im bevorzugten Ausführungsbeispiel eine zweite Steigung auf, deren Wert von dem der ersten Steigung abweicht, vorzugsweise den halben Wert aufweist. Im Bereich der Ruhestellung des Bedienelements weist die Kennlinie des Sensors 18 einen stufenförmigen Verlauf auf. Die Kennlinie des Sensors 18 besteht somit aus einer Kombination eines kontinuierlichen Sensors und einer Schaltfunktion.

In einer vorteilhaften Erweiterung der in Figur 2 dargestellten Kennlinien weist die Kennlinie des Sensors 18 einen entsprechenden stufenförmigen Verlauf im Bereich der Endstellung des Bedienelements auf. Der sprungförmige Verlauf wird dann zur Erkennung des Kick-Down-Punktes und zur Auslösung eines entsprechenden Rückschaltvorgangs bei einem automatischen Getriebe ausgewertet.

Die in Figur 2 dargestellten Kennlinien zeigen die Abhängigkeit der von den Sensoren auf die Leitungen 20 und 22 ausgegebenen Messsignalgrößen von der Stellung des Bedienelements. In anderen Ausführungen werden die in Figur 2 dargestellten Charakteristiken durch entsprechende Maßnahmen in der Steuereinheit 24 gebildet, so dass die Größen U die dort ermittelte Größe, ggf. eine Größe digitaler Art, darstellt. In anderen Ausführungsbeispielen stellen diese Größen U die direkten Ausgangsgrößen der Sensoren dar, die dann noch im Bereich des Stellungsgebers 15 weiterverarbeitet werden.

Ein bevorzugtes Ausführungsbeispiel des Stellungsgebers ist ein Doppelanalogpotentiometer mit zwei Kohlespuren. Dabei wird die Charakteristik des zweiten Potentiometers so gebildet, dass sie den in Figur 2 dargestellten charakteristischen Sprung der Spannungskennlinie im Bereich kleiner Stellungen (im Beispiel eines Bedienelements bei ca. 5 % Betätigungsweg) gekennzeichnet ist. Dieser sprungförmige Verlauf der Spannungskennlinie simuliert mit der notwendigen Genauigkeit einen Schalter in der Leergasstellung, wobei der Schaltpunkt auch mit einer analogen Einheit eines Steuergeräts oder seines Mikrocomputers ohne Toleranzprobleme erfassbar ist. Es ermöglicht daher eine Plausibilisierung der beiden Signale, die wesentlich früher beginnen kann als bei der eingangs genannten Lösung. Ein zu langer Leerweg, wie er bei Stellungsgebern der eingangs genannten Art in einigen Ausführungen auftreten kann, wird auf einfache Weise verhindert. Dabei muss nicht auf die Plausibilisierung der Stellungssignale über den gesamten Bereich des Betätigungswinkels verzichtet werden. Die Charakteristik des ersten Potentiometers wird nicht verändert und somit dessen Auswertung in bezug auf Überwachung und Steuerung nicht beeinträchtigt.

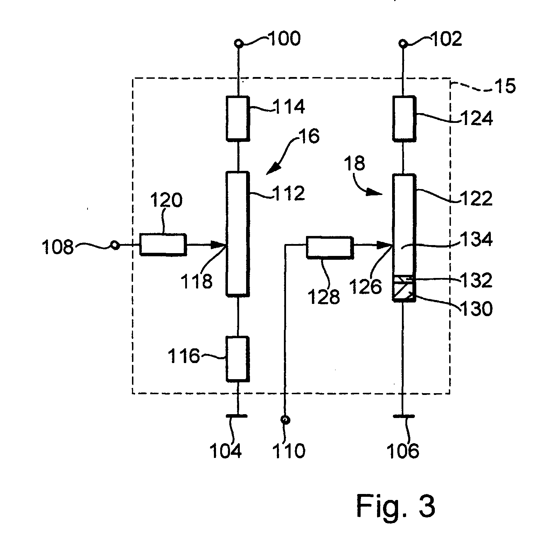

Figur 3 zeigt ein bevorzugtes Ausführungsbeispiel eines Doppelanalogpotentiometers 15, dessen Sensoren 16 und 18 die in Figur 2 dargestellte Charakteristiken aufweisen. Der Stellungsgeber weist Versorgungsspannungsanschlüsse 100 und 102 sowie Masseanschlüsse 104 und 106 auf. Diese Anschlüsse sind in einem bevorzugten Ausführungsbeispiel im Stellungsgeber 15 zusammengeführt, so dass nach aussen nur jeweils ein Anschluss vorhanden ist. Ferner werden an den Anschlüssen 108 und 110 die Messsignale der Sensoren 16 und 18 abgenommen.

Sensor 16 besteht dabei aus einer Potentiometerbahn 112, die über einen Vorwiderstand 114 mit der Versorgungsspannung (Anschluss 100) und über den Vorwiderstand 116 mit Masse (Anschluss 104) verbunden ist. Der Schleifer 118, welcher in Abhängigkeit des Aggregats betätigt wird, dessen Stellung erfasst wird, bewegt sich über die gesamte oder zumindest einen Großteil der Schleiferbahn 112 von der ersten Endstellung bis zur zweiten Endstellung. Die Signalleitung des Schleifers 118 wird über den Widerstand 120 zum Anschluss 108 geführt, an dem das Signal von der Steuereinheit abgenommen werden kann. In einem bevorzugten Ausführungsbeispiel haben sich als Widerstandswerte für den Vorwiderstand 114 100Ω, die Schleiferbahn 112 450Ω, den Vorwiderstand 116 150Ω und für den Widerstand 120 1 kΩ als geeignet erwiesen. Bei einer Versorgungsspannung von 5V ergibt sich daher über die gesamte Anordnung 114, 112 und 116 als Spannungsabfall von 5V, über der Schleiferbahn 112 und Vorwiderstand 116 von 4,2 V und über den Vorwiderstand 116 1V.

Der zweite Sensor 18 besteht ebenfalls aus einer Potentiometerbahn 122, die über einen Vorwiderstand 124 an Versorgungsspannung (Anschluss 102) angeschlossen ist. Die Potentiometerbahn 122 ist im Gegensatz zu der des Sensors 16 ohne Widerstand an Masse (Anschluss 106) angebunden. Der Schleifer 126 bewegt sich auch hier parallel zum dem Schleifer 118 über der gesamten Länge oder zumindest einen Großteil davon der Widerstandsbahn 122 in Abhängigkeit der Stellung des mit den Schleifern verbundenen Aggregats. Über seine Signalleitung und einen Widerstand 128 wird das Messsignal zum Anschluss 110 geführt. Die Besonderheit, mit deren Hilfen die in Figur 2 dargestellte Charakteristik realisiert ist, besteht darin, dass die Widerstandsbahn 122 unterschiedliche Widerstandswerte aufweist. In einem ersten Bereich 130, der ausgehend von einer Endstellung (vorzugsweise Ruhestellung) des mit den Schleifer verbundenen Elements einen kleinen Bereich des Gesamtweges, im bevorzugten Ausführungsbeispiel ca. 5 %, umfasst, weist einen sehr kleinen Widerstandswert, z.B. 0Ω, auf. Der zweite, noch kleinere Bereich 132, der einen nur sehr geringen Teil des gesamten Bewegungsbereichs darstellt (beispielsweise < 1 %) weist einen Widerstandswert (z.B. 375Ω) auf, der größer ist als der im vorhergehenden Bereich, aber kleiner als der im restlichen Bereich vorhandene Wert ist. Der dritte Bereich 134, der somit mehr als 94% des Gesamtregelweges abdeckt, weist einen höheren Widerstandswert, z.B. 750Ω, auf. Zur Erzeugung der geringeren Steigung ist der Widerstandswert des Widerstandes 124 höher als der des Widerstandes 114, im bevorzugten Ausführungsbeispiel hat sich hier 750Ω als geeignet erwiesen. Der Wert des Widerstands 128 entspricht dem des Widerstands 120. Somit ergibt sich im Bereich von der ersten Endstellung bis zum Übergang des Bereichs 130 auf den Bereich 132 ein Spannungsabfall von 0V. Im Bereich des Widerstandswertes 132 ergibt sich ein Spannungsabfall von 1V, während der Bereich 134 einen Spannungsabfall von max. 3V auf Masse realisiert. Auch hier ist als Versorgungsspannung 5V angenommen. Fährt also der Schleifer 126 beginnend mit der ersten Endstellung in die andere Endstellung, so wird im ersten Teil des Bewegungsbereichs kein Spannungsabfall und somit kein Signal erzeugt. Im zweiten Bereich 132 wird auf relativ kleinem Weg ein relativ großer Spannungsabfall gemessen, so dass sich ein sprungförmiger Verlauf in der Kennlinie ergibt. Die weitere lineare Kennlinie wird vom Widerstandsbereich 134 erzeugt.

In anderen Ausführungsbeispielen werden andere Widerstandswerte eingesetzt. Wesentlich ist, dass durch die Gestaltung verschiedener Widerstandsbereiche auf einer Potentiometerbahn ein sprungförmiger Verlauf der Potentiometercharakteristik erreicht werden kann. Dabei sind auch sprungförmige Verläufe am anderen Ende der Potentiometerbahn oder auch bei Bedarf in deren Mitte möglich.

Im bevorzugten Ausführungsbeispiel einer Motorleistungssteuerung, welche anhand des Übersichtsschaltbilds der Figur 1 dargestellt ist, dienen die Signale der Sensoren 16 und 18 zur Auswertung des Fahrerwunsches und/oder zur Erfassung der Stellung des Leistungsstellelements, wobei zur Überwachungszwecken die beiden Signale miteinander verglichen werden. Bei unzulässigen Abweichungen der Signale zueinander wird von einem Fehlerzustand ausgegangen und ggf. Notlaufmaßnahmen eingeleitet.

Die Auswertung der Signalgrößen findet in der Steuereinheit 24, dort im Mikrocomputer statt, in dem ein Programm mit einem entsprechenden Überwachungsalgorithmus abläuft. Figur 4 stellt ein derartiges Programm anhand eines Flussdiagramms dar.

Nach Start des Programms im Rahmen der zyklischen Abarbeitung im Mikrocomputer werden im ersten Schritt 200 die Signale der Sensoren 16 und 18 (U16, U18) eingelesen. Daraufhin wird anhand des Signals des Sensors 18 überprüft, welcher Schaltzustand eingenommen ist. Konkret wird überprüft, ob sich die Sensoranordnung im Bereich der Ruhestellung des Bedienelements, d. h. im Bereich dessen Leerlaufposition befindet. Dieser Bereich ist der in Figur 3 dargestellte Bereich 130, der ca. 5% des gesamten Bewegungsbereichs umfasst. Wird anhand des Signals U18 im Schritt 202 erkannt, dass dieser Leerlaufbereich (LL) eingenommen ist, so wird im darauffolgenden Schritt 204 überprüft, ob der Signalwert des Sensors 16 einen vorgegebenen Schwellenwert S1 übersteigt. Ist dies der Fall, wird gemäß Schritt 206 von einer Fehlfunktion, im anderen Fall gemäß Schritt 208 von der Normalfunktion des Sensors ausgegangen. Wurde in Schritt 202 ein Verlassen des Leerlaufbereichs erkannt, so wird im darauffolgenden Abfrageschritt 210 beispielsweise auf der Basis der bekannten Gleichlauftoleranzüberprüfung ermittelt, ob die Signalwerte U16 und U18 plausibel zueinander sind (Vergleich der Signalgrößen, wobei wenigstens einer rechnerisch auf den anderen Signalwert abgebildet wird). Ist dies nicht der Fall, wird eine Fehlfunktion gemäß Schritt 206 festgestellt, ist dies der Fall, wird vom Normalbetriebszustand ausgegangen (208). Die genannten Überprüfungen erfolgen selbstverständlich nach Maßgabe vorgegebener Toleranzgrenzen.

Die Sensoren 16 und 18 weisen in anderen Ausführungsbeispielen andere Charakteristiken auf, beispielsweise sind die Steigungen der linearen Kennlinien gleich bzw. gegenläufig.

## Patentansprüche

1. Stellungsgeber (15), bestehend aus zwei Sensoren (16, 18), welche jeweils die Stellung eines mit dem Stellungsgebers (15) verbundenen Aggregats (10) erfassen, wobei die beiden Sensoren (16, 18) vorgegebene Charakteristiken aufweisen, **dadurch gekennzeichnet, dass** der erste Sensor (16) eine Charakteristik einer Messsignalgröße über der Stellung aufweist, die im wesentlichen linear über den gesamten Stellungsbereich ist, während der zweite Sensor (18) eine Charakteristik aufweist, welche in wenigstens einem ersten Stellungsbereich einen sprungförmigen Verlauf, in wenigstens einem zweiten Bereich außerhalb dieses ersten Stellungsbereichs einen im wesentlichen linearen Verlauf aufweist.

2. Stellungsgeber (15) nach Anspruch 1, **dadurch gekennzeichnet, dass** der sprungförmige Verlauf im Bereich wenigstens einer Endstellung des mit dem Stellungsgeber (15) verbundenen Aggregats (10) ist.

3. Stellungsgeber(15) nach einem der vorhergehenden Ansprüche, **dadurch gekennzeichnet, dass** der wenigstens eine sprungförmige Verlauf der Kennlinie den Gesamtstellungsbereich in zwei Bereiche aufteilt, wobei im ersten Bereich kein die Stellung kontinuierlich erfassendes Signal, im anderen Bereich eine im wesentliche lineare Kennlinie des Signals auftritt.

4. Stellungsgeber (15) nach einem der vorhergehenden Ansprüche, **dadurch gekennzeichnet, dass** an beiden Endstellungen und/oder in einem beliebigen Stellungsbereich sprungförmige Verläufe vorgesehen sind.

5. Stellungsgeber (15) nach einem der vorhergehenden Ansprüche, **dadurch gekennzeichnet, dass** die Steigungen der Kennlinien in den Bereichen, in denen sie einen im wesentlicher linearen Verlauf annehmen, unterschiedlich, gleich oder gegenläufig sind.

6. Stellungsgeber (15) nach einem der vorhergehenden Ansprüche, **dadurch gekennzeichnet, dass** die Sensoren (16, 18) Potentiometer sind und der sprungförmige Verlauf durch Schleiferbahnbereiche (130, 132, 134) mit unterschiedlichen Widerstandswerten realisiert ist.

7. Stellungsgeber(15) nach einem der vorhergehenden Ansprüche **dadurch genkennzeichnet,** dass er als Stellungsgeber (15) zur Erfassung des Betätigungswinkels eines Fahrpedals oder eines leistungsbestimmenden Elements in Kraftfahrzeugen dient.

8. Verfahren zur Überwachung eines Stellungsgebers(15), welcher zwei die Stellung repräsentierenden Messsignale ausgibt, wobei eines im wesentlichen linear über den gesamten Stellungsbereich sich verändert, **dadurch gekennzeichnet, dass** das Signal des zweiten Sensors (18) in wenigstens einem ersten Stellungsbereich einen sprungförmigen Verlauf, in wenigstens einem zweiten Bereich außerhalb dieses ersten Stellungsbereichs einen im wesentlichen linearen Verlauf aufweist, wobei zur Fehlererkennung wenigstens eine Plausibilitätsüberprüfung der Signale ausgeführt wird.

9. Vorrichtung zur Überwachung eines Stellungsgebers (15), mit einer Steuereinheit (24), der ein erstes Stellungsmesssignal und ein zweites Stellungsmesssignal ermittelt, wobei das erste Stellungsmesssignal über der Stellung des zu messenden Aggregats (10) einen im wesentlichen linearen Verlauf aufweist, **dadurch gekennzeichnet, dass** das andere Signal des zweiten Sensors (18) in wenigstens einem ersten Stellungsbereich einen sprungförmigen Verlauf, in wenigstens einem zweiten Bereich außerhalb dieses ersten Stellungsbereichs einen im wesentlichen linearen Verlauf aufweist, und dass die Steuereinheit (24) ferner Mittel umfasst, die zur Fehlererkennung wenigstens eine Plausibilitätsüberprüfung der Signale durchführen.

## Claims

1. Position sensor (15) comprising two sensors (16, 18) which respectively detect the position of a unit (10) which is connected to the position sensor (15), the two sensors (16, 18) having predefined characteristics, **characterized in that** the first sensor (16) has a characteristic of a measurement signal variable against the position, which is essentially linear over the entire range of positions, whereas the second sensor (18) has a characteristic having a stepped profile in at least one first range of positions and having an essentially linear profile in at least one second range outside this first range of positions.

2. Position sensor (15) according to Claim 1,
**characterized in that** the stepped profile is in the region of at least one end position of the unit (10) which is connected to the position sensor (15).

3. Position sensor (15) according to one of the preceding claims, **characterized in that** the at least one stepped profile of the characteristic curve divides the total range of positions into two ranges, a signal which continuously detects the position not occurring in the first range and an essentially linear characteristic curve of the signal occurring in the other range.

4. Position sensor (15) according to one of the preceding claims, **characterized in that** stepped profiles are provided at both end positions and/or in any desired range of positions.

5. Position sensor (15) according to one of the preceding claims, **characterized in that** the gradients of the characteristic curves are different, identical or opposed in the ranges in which they assume an essentially linear profile.

6. Position sensor (15) according to one of the preceding claims, **characterized in that** the sensors (16, 18) are potentiometers and the stepped profile is realized using wiper track regions (130, 132, 134) with different resistance values.

7. Position sensor (15) according to one of the preceding claims, **characterized in that** it is used as a position sensor (15) for detecting the actuation angle of an accelerator pedal or an element which determines power in motor vehicles.

8. Method for monitoring a position sensor (15) which outputs two measurement signals representing the position, one of which changes in an essentially linear manner over the entire range of positions, **characterized in that** the signal from the second sensor (18) has a stepped profile in at least one first range of positions and has an essentially linear profile in at least one second range outside this first range of positions, at least one plausibility check being carried out on the signals in order to detect errors.

9. Apparatus for monitoring a position sensor (15), said apparatus having a control unit (24) which determines a first position measurement signal and a second position measurement signal, the first position measurement signal having an essentially linear profile against the position of the unit (10) to be measured, **characterized in that** the other signal from the second sensor (18) has a stepped profile in at least one first range of positions and has an essentially linear profile in at least one second range outside this first range of positions, and **in that** the control unit (24) also comprises means which carry out at least one plausibility check on the signals in order to detect errors.

## Revendications

1. Capteur de position (15) composé de deux détecteurs (16, 18) qui saisissent respectivement la position d'une unité (10) reliée au capteur de position (15),
les deux détecteurs (16, 18) ayant des caractéristiques prédéfinies,
**caractérisé en ce que**
le premier détecteur (16) a une caractéristique d'une grandeur de signal de mesure concernant la position, qui est principalement linéaire dans toute la plage de réglage alors que le second détecteur (18) a une caractéristique ayant au moins une première plage de réglage, avec une forme à variation brusque une et au moins une seconde plage en dehors de cette première plage de position, avec une forme pratiquement linéaire.

2. Capteur de position (15) selon la revendication 1,
**caractérisé en ce que**
la forme à variation brusque se situe dans la région d'au moins une position de fin de course de l'unité (10) reliée au capteur de position (15).

3. Capteur de position (15) selon l'une des revendications précédentes,
**caractérisé en ce qu'**
au moins la forme à variation brusque de la courbe caractéristique divise toute la plage de réglage en deux plages et dans la première plage il n'y a pas de signal saisissant la position de façon continue et dans l'autre plage, il y a une caractéristique pratiquement linéaire du signal.

4. Capteur de position (15) selon l'une des revendications précédentes,
**caractérisé en ce qu'**
aux deux positions de fin de course et/ou dans une plage de position quelconque, il y a des variations brusques.

5. Capteur de position (15) selon l'une des revendications précédentes,
**caractérisé en ce que**
la pente des courbes caractéristiques dans les zones dans lesquelles elles ont une forme pratiquement linéaire, sont différentes, identiques ou opposées.

6. Capteur de position (15) selon l'une des revendications précédentes,
**caractérisé en ce que**
les détecteurs (16, 18) sont des potentiomètres et la forme à variation brusque est réalisée par des plages de trajectoires de curseur (130, 132, 134) ayant des valeurs de résistance différentes.

7. Capteur de position (15) selon l'une des revendications précédentes,
**caractérisé en ce qu'**
il sert de capteur de position (15) pour saisir l'angle d'actionnement de la pédale d'accélérateur ou d'un élément déterminant la puissance dans les véhicules automobiles.

8. Procédé de surveillance d'un capteur de position (15) émettant deux signaux de mesure représentant la position, l'un variant de façon pratiquement linéaire dans toute la plage de réglage,
**caractérisé en ce que**
le signal du second détecteur (18) a une forme à variation brusque au moins dans une première plage de réglage et dans au moins une seconde plage en dehors de cette première plage de réglage, il présente une forme pratiquement linéaire, et pour détecter un défaut on effectue au moins une vérification de plausibilité des signaux.

9. Dispositif de surveillance d'un capteur de position (15) comportant une unité de commande (24) déterminant un premier signal de mesure de position et un second signal de mesure de position,
le premier signal de mesure de position ayant une forme pratiquement linéaire sur la position de l'unité (10) à mesurer,
**caractérisé en ce que**
l'autre signal du second détecteur (18) présente une variation brusque dans au moins une première plage de réglage et dans au moins une seconde plage de réglage, en dehors de cette première plage de réglage, il présente une forme pratiquement linéaire et
l'unité de commande (24) comprend en outre des moyens effectuant au moins une vérification de plausibilité des signaux pour déceler des défauts.
